# EUROPÄISCHE PATENTANMELDUNG

(11) **EP 0 864 783 A2**
(43) Veröffentlichungstag der Anmeldung: **16.09.1998**
(21) Anmeldenummer: 98890062.7
(22) Anmeldetag: 10.03.1998
(51) Int. Cl.: F16H 63/30, F16H 63/38

(54) **Schaltgetriebe mit auf einer Achse verschiebbaren Schaltgabeln**

(30) Priorität: 11.03.1997 AT 416/97
(71) Anmelder: STEYR-DAIMLER-PUCH AKTIENGESELLSCHAFT, 1010 Wien (AT)
(72) Erfinder: Jegel, Franz Peter, Ing., 4400 Steyr (AT)

(57) **Zusammenfassung**

In einem Schaltgetriebe sind mindestens zwei Schaltgabeln (6,7) auf einer Schaltachse (5) in Längsrichtung verschiebbar, wobei zusammenwirkende Rastmulden (14,14',14"; 15,15',15") und druckbelastete Rastkörper (12,13) vorgesehen sind. Um eine einfache und sichere Verstellung der Position der Schaltgabeln zu schaffen, sind die einer Schaltgabel (6) zugeordneten Rastmulden (14,14',14") schräg zur Umfangsrichtung der Schaltachse (5), die der anderen Schaltgabel (7) zugeordneten Rastmulden (15,15',15") aber in Umfangsrichtung der Schaltachse, und ist die Schaltachse (5) drehbar und mittels einer Spannbüchse (20) arretierbar.

## Beschreibung

Die Erfindung betrifft ein Schaltgetriebe, in dessen Gehäuse mindestens zwei Schaltgabeln auf einer Schaltachse in Längsrichtung verschiebbar sind und in verschiedenen Stellungen verrasten, wobei auf dem einen und dem anderen Teil zusammenwirkende Rastmulden und druckbelastete Rastkörper vorgesehen sind. Schaltgabeln haben im allgemeinen drei Stellungen, eine neutrale und je eine für einen der beiden Gänge der jeweiligen Schaltgasse und jeweils eine Rastmulde für jede Stellung.

In derartigen Getrieben sind die Rastmulden meist, aber nicht immer, auf der Schaltachse angeordnet - je drei für eine Schaltgabel und in einigem Abstand voneinander. Dabei ist die mittlere der drei Mulden kritisch. Sie entspricht dem Leerlauf und sie muß - vor allem bei synchronisierten Getrieben - so genau positioniert sein, daß keine unerwünschte Reibung - etwa zwischen den Synchronisierungselementen - auftritt. Das führt zu erhöhtem Verschleiß und fallweise zur Zerstörung des Getriebes. Die erforderliche Genauigkeit hängt von den Toleranzen einer großen Anzahl anderer Getriebeteile ab.

Es ist aus der Praxis bekannt, einzele Gabeln anzupassen, indem die Rastkörper aufnehmende Führungen einzeln axial verstellt und fixiert werden. Das muß während der Montage des Getriebes erfolgen und ist sehr arbeitsaufwendig. Die Verstellelemente sind meist schlecht zugänglich und neigen dazu, sich im Betrieb zu lockern. Das kann ebenfalls zur Zerstörung des Getriebes führen.

Es ist somit Ziel der Erfindung, eine einfache und sichere Verstellung der Position der Schaltgabeln zu schaffen.

Erfindungsgemäß wird das dadurch erreicht, daß die einer Schaltgabel zugeordneten Rastmulden schräg zur Umfangsrichtung der Schaltachse, die der anderen Schaltgabel zugeordneten aber in Umfangsrichtung der Schaltachse verlaufen, und daß die Schaltachse drehbar und in einer Winkelstellung arretierbar ist. Auf diese Weise kann durch Verdrehen der Schaltachse eine der Schaltgabeln eingestellt werden. Wenn auf der Schaltachse drei Schaltgabeln geführt sind, so kann mittels der schrägen Mulden eine davon verstellt werden, die beiden anderen haben gerade Mulden. Diese Verstellung kann von ausserhalb des Gehäuses vorgenommen werden, wenn die Schaltachse bereits montiert ist. Nach der Einstellung wird die Schaltachse in der jeweiligen Winkelstellung arretiert.

Vorzugsweise sind die Rastmulden auf der Schaltachse angeordnet und die Rastkörper in einer Nabe der Schaltgabel geführt (Anspruch 2). Das minimiert den Fertigungsaufwand, die Schaltgabeln sind im Falle einer Änderungskonstruktion nicht betroffen.

In weiterer Entwicklung des Erfindungsgedankens ist die Schaltachse auf einer Seite mittels einer Spannbüchse im Gehäuse arretierbar (Anspruch 3). Diese Arretierung erfordert keine Änderungen am Gehäuse, es genügt die vorhandene zylindrische Bohrung.

Praktischerweise ist die Schaltachse auf der Seite der Spannbüchse aus dem Gehäuse geführt und mit einem Kantprofil versehen (Anspruch 4). Somit kann auch die Einstellung und Arretierung der Schaltachse in der eingestellten Winkelposition von aussen vorgenommen werden.

Im folgenden wird die Erfindung anhand von Abbildungen beschrieben und erläutert. Es stellen dar:
- Einzige Fig.:: Einen Längsschnitt durch ein erfindungsgemäßes Getriebe, unter Weglassung der die Erfindung nicht betreffenden Getriebeteile,

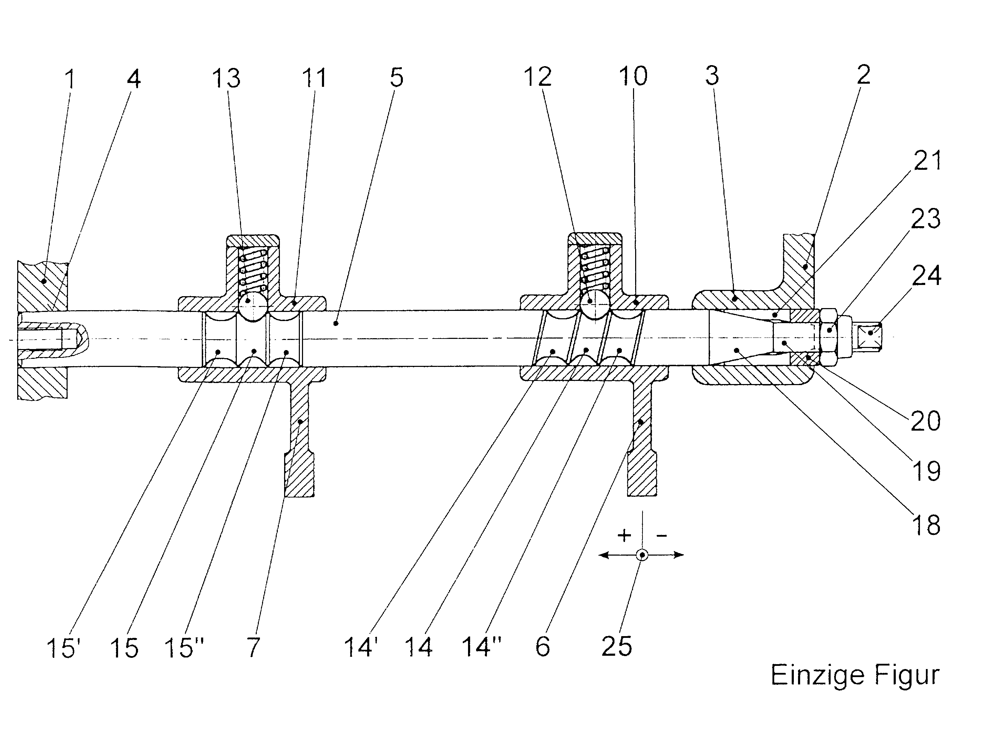

In Figur 1 sind vom Getriebegehäuse nur die Wandteile 1 und 2 zu sehen, der Rest des Gehäuses ist weggelassen, ebenso wie die Wellen, Zahnräder und die sonstigen von der Erfindung nicht betroffenen Betätigungsteile. Zwischen einem Stutzen 3 der einen Gehäusewand 2 und einer Bohrung 4 der anderen Gehäusewand 1 ist eine Schaltachse 5 eingespannt. Auf dieser ist eine erste Schaltgabel 6 und eine zweite Schaltgabel 7 verschiebbar geführt. Die Schaltgabeln 6,7 verschieben beim Gangwechsel in bekannter Weise Kupplungsmuffen oder Verzahnungsteile von einer Neutralstellung in eine oder zwei Schaltstellungen derselben Schaltgasse.

Beide Schaltgabeln 6,7 sind mittels Führungsnaben 10,11 jeweils auf der Schaltachse 5 verschiebbar. Sie enthalten federbelastete Rastkörper 12,13, die in Rastmulden 14,14',14" bzw. 15,15',15" eingreifen. Erfindungsgemäß sind nun die Rastmulden 14,14',14" bezüglich der Umfangsrichtung der Schaltachse 5 schräg angeordnet. Diese schrägen Rastmulden werden vorzugsweise mit einer gewindeartigen Steigung eingefräst, was im gezeigten Ausführungsbeispiel der Deutlichkeit halber über den gesamten Umfang der Schaltachse 5 eingezeichnet ist. Es genügt aber, diese nur auf einem kleinen Teil des Umfanges einzufräsen. Die Rastmulden 15,15',15" sind in Umfangsrichtung der Schaltachse 5 eingearbeitet.

An einem Ende bildet die Schaltachse 5 einen Konus 18, an den ein Gewindeteil 19 geringeren Durchmessers anschließt. Der Konus 18 wirkt mit dem passenden Konus einer Spannbüchse 20 zusammen, der mittels einer Spannmutter 23 aufgeweitet und so in dem Stutzen 3 verkeilt wird. Die Spannmutter 23 ist von ausserhalb des Gehäuses zugänglich, die Schaltachse endet in einem Vierkant 24 der ebenfalls von außen zugänglich ist.

Wenn beim Zusammenbau des Getriebes alle Teile eingebaut sind, wird durch Verdrehen der Schaltachse 5 bezüglich der Schaltgabeln, die nach dem Einbau ja nicht mehr um die Schaltachse 5 drehbar sind, die erste Schaltgabel 6 in Richtung der Pfeile 25 verschoben, ohne daß die zweite Schaltgabel 7 dabei verschoben wird. Auf diese Weise kann, anders ausgedrückt, die Entfernung zwischen den beiden Schaltgabeln 6,7 zusätzlich eingestellt werden. In der so gefundenen Winkelstellung wird die Schaltachse 5 dann durch Anziehen der Spannmutter 23 festgelegt. Dazu kann die Spannbuchse 20 mit nicht dargestellten Krallen versehen sein.

## Patentansprüche

1. Schaltgetriebe, in dessen Gehäuse mindestens zwei Schaltgabeln auf einer Schaltachse in Längsrichtung verschiebbar sind und in verschiedenen Stellungen verrasten, wobei auf dem einen und dem anderen Teil zusammenwirkende Rastmulden und druckbelastete Rastkörper vorgesehen sind, **dadurch gekennzeichnet**, daß die einer Schaltgabel (6) zugeordneten Rastmulden (14,14',14") schräg zur Umfangsrichtung der Schaltachse (5) verlaufen, die der anderen Schaltgabel (7) zugeordneten Rastmulden (15,15',15") aber in Umfangsrichtung der Schaltachse, und daß die Schaltachse (5) drehbar und in einer Winkelstellung arretierbar ist.

2. Schaltgetriebe nach Anspruch 1, **dadurch gekennzeichnet,** daß die Rastmulden (14,15) auf der Schaltachse angeordnet und die Rastkörper (12,13) in einer Nabe (10,11) der Schaltgabel (6,7) geführt sind.

3. Schaltgetriebe nach Anspruch 1, **dadurch gekennzeichnet**, daß die Schaltachse (5) auf einer Seite mittels einer Spannbüchse (20) im Gehäuse (2) arretierbar ist.

4. Schaltgetriebe nach Anspruch 3, **dadurch gekennzeichnet** , daß die Schaltachse (5) auf der Seite der Spannbüchse (20) aus dem Gehäuse geführt und mit einem Kantprofil (24) versehen ist.
